(19) Europäisches Patentamt

European Patent Office

Office européen des brevets

(11) EP 1 184 588 A2

(12) EUROPEAN PATENT APPLICATION

(43) Date of publication:
06.03.2002 Bulletin 2002/10

(51) Int Cl.⁷: **F16F 1/38**

(21) Application number: 01108847.3

(22) Date of filing: 09.04.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.08.2000 JP 2000258493**

(71) Applicant: **Kinugawa Rubber Industrial Co., Ltd., Chiba-shi, Chiba 263-0005 (JP)**

(72) Inventors:
• **Hosooka, Kazuoki, Kinugawa Rubber Ind. Co., Ltd Chiba-shi, Chiba 263-0005 (JP)**
• **Suzuki, Makoto, Kinugawa Rubber Ind. Co., Ltd Chiba-shi, Chiba 263-0005 (JP)**

(74) Representative:
**Leson, Thomas Johannes Alois, Dipl.-Ing. Tiedtke-Bühling-Kinne & Partner GbR, TBK-Patent, Bavariaring 4 80336 München (DE)**

(54) **Propeller-shaft**

(57) A propeller shaft has a dynamic damper composed of a cylindrical mass member and an elastic body surrounding the mass member. The elastic body has an outside diameter larger than the inside diameter of a tubular body, and is held therein by compression and elastic deformation. The elastic body has a number of radially outwardly extending protrusions and its compression is such that a frictional resistance produced between its protrusions and the inner surface of the tubular body may be larger than a force causing the withdrawal of the damper from the tubular body. The damper can, thus, be placed in position without relying upon any adhesive, or special holding member, or any special bonding job.

F I G. 1

**Description**

BACKGROUND OF THE INVENTION

This invention relates to an automobile propeller shaft, and more particularly, to a propeller shaft improved on the material and the installation structure of a dynamic damper.

An automobile propeller shaft is a shaft for transmitting the driving power of an engine from a gearbox to a reduction gear and usually has a dynamic damper mounted in its tubular body for suppressing its vibration. The dynamic damper consists mainly of a mass member and an elastic or rubber member.

If an automobile is started and stopped repeatedly, acceleration is produced longitudinally of the vehicle and therefore axially of the tubular body of the propeller shaft. If such acceleration acts upon its mass member, a corresponding amount of power acts upon the dynamic damper as a whole. If the dynamic damper is not satisfactorily secured to the tubular body, the acceleration causes it to slide away from its optimum position in the tubular body and thereby become less effective.

In view of the influence of the acceleration as stated, it is necessary to ensure that a dynamic damper be so constructed as not to move away from its optimum position in the tubular body, as shown in, for example, Japanese Patent Application Laid-Open No. 223543/1991 or Japanese Utility Model Application Laid-Open No. 122843/1992.

Japanese Utility Model Application Laid-Open No. 122843/1992 discloses a dynamic damper composed of an outer pipe having an outside diameter larger than the inside diameter of the main body of a propeller shaft, the outer pipe having an axially extending slit, an inner weight, or mass member positioned axially of the outer pipe and thereby secured in position, and a rubber mount interposed between the outer pipe and the inner weight for connecting them elastically. The dynamic damper is press fitted in the main body of the propeller shaft. The outer pipe has an outer peripheral surface held in intimate contact with the inner peripheral surface of the main body by the elastic force of the rubber mount.

Japanese Patent Application Laid-Open No. 223543/1991 discloses a dynamic damper composed of a principal vibration unit having a propeller shaft itself as a mass member and a rubbery elastic body as a spring, and an auxiliary vibration unit having a mass member provided on the propeller shaft and an auxiliary elastic body as a spring. The mass member is, for example, a solid (or tubular) member held in the cylindrical tubular body coaxially by the auxiliary elastic body joined to it by adhesion, such as by vulcanization, or with an adhesive.

Both of the arrangements are, however, costly, since the former device disclosed in the utility model application requires a securing member, such as the outer pipe, while the latter disclosed in the patent application requires an adhesive, or an adhering job.

The installation of a dynamic damper in the tubular body of a propeller shaft without relying upon any adhesive, or any adhering job has not practically been adopted because of doubt about safety, since it is necessary to hold the damper against movement from its appropriate position in the tubular body.

The elastic body in the known dynamic damper is of, for example, chloroprene or natural rubber, but no such material is satisfactory in heat resistance to withstand use in a severe environment having a temperature exceeding 100 °C.

Thus, there has been a desire for the development of a propeller shaft to ensure the property required for a dynamic damper sufficiently and to overcome the problems as pointed out above.

SUMMARY OF THE INVENTION

Under these circumstances, it is an object of this invention to provide an economical and highly safe propeller shaft having a dynamic damper including a heat-resistant elastic body.

This object is attained by a propeller shaft having a tubular body and a dynamic damper, the dynamic damper having a hollow or solid cylindrical mass member and an elastic body covering the outer peripheral surface of the mass member, the damper being so mounted in the tubular body that the elastic body may have an outer peripheral surface contacting the inner peripheral surface of the tubular body, the elastic body having an outside diameter exceeding the inside diameter of the tubular body, the elastic body being compressed and deformed elastically to have the damper secured on the inner peripheral surface of the tubular body, its compression being such that the frictional resistance produced in the area of contact between the elastic body and the tubular body may be larger than a force causing the withdrawal of the damper, or a load causing the elastic body to slide away from its proper position in the shaft.

The elastic body may have a plurality of (preferably three or more) radially outwardly projecting portions.

The elastic body is preferably of a rubber composition containing 100 parts by weight of an ethylene-alpha-olefin-unconjugated diene terpolymer, 0.1 to 10 parts by weight of sulfur and 25 to 100 parts by weight of carbon black.

The terpolymer is preferably of ethylene, an alpha-olefin having 3 to 20 carbon atoms and 5-ethylidene-2-norbornene, and has a molar ethylene/alpha-olefin ratio of 65/35 to 73/27, an intrinsic viscosity $[\eta]$ of 3.7 to 4.2 dl/g as determined in decalin at 135 °C and a melt flow index of 0.2 to 0.5 g/10 minutes as determined at 230 °C after oil extension with 50 phr of paraffinic oil.

It has hitherto been usual to use an adhesive, or a holding member, or add a bonding job to hold a dynamic damper against axial movement from its proper position in the tubular body of a propeller shaft, as stated before. None of these means is, however, necessary any longer.

According to this invention, the elastic body and its protrusions are compressed for elastic deformation to secure the dynamic damper in the tubular body. As a result, a reaction force is produced in the elastic body, and produces a large frictional resistance between the elastic body and the tubular body.

If any load transmitted axially of the tubular body and acting upon the dynamic damper, mainly its mass member, becomes larger than the frictional resistance existing between the elastic and tubular bodies, the elastic body begins to slide away from its proper position in the tubular body. The load causing the elastic body to slide, or a force causing its withdrawal is produced by acceleration when the automobile is started or stopped.

The force causing its withdrawal differs with the conditions of its use, but depends mainly on its mass member. If an acceleration of 15 G (maximum) acts axially of the tubular body, a load equal to 15 times the mass of its mass member acts upon the dynamic damper. If its mass member has a mass of 250 g, the force causing its withdrawal amounts to 3,750 g, as 250 (g) is multiplied by 15 (G).

According to this invention, the frictional resistance is set at a value larger than the force causing the withdrawal of the dynamic damper. Moreover, it can be larger than a value obtained by multiplying the force by a safety factor (e. g. two).

The ethylene - alpha-olefin - unconjugated diene terpolymer (EPDM) as the main component of the rubber composition for the elastic body can be prepared by, for example, the method described in Japanese Patent Publication No. 14497/1984, namely, by using hydrogen as a molecular weight controller for copolymerizing ethylene, an alpha-olefin having 3 to 20 carbon atoms and diene in the presence of a Ziegler catalyst. The terpolymer preferably has an iodine value of 10 to 25.

The carbon black in the rubber composition is preferably furnace carbon black for rubber, such as HAF, MAF, FEF or GPF. The composition contains carbon black in the amount of 25 to 100 parts, preferably 40 to 100 parts, and more preferably 50 to 80 parts, all by weight with 100 parts by weight of EPDM.

Examples of the alpha-olefins having 3 to 20 carbon atoms are propylene, butene-1, hexene-1, pentene-1, 4-methylpentene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1 and eicosene-1. They may be used individually, or in combination.

The rubber composition may further contain a vulcanization accelerator, a softening agent, or any other additive used commonly in the manufacture of a molded product of vulcanized rubber, such as ethylene-propylene rubber, to the extent which is acceptable for the object of this invention.

The rubber composition is molded into a desired shape by, for example, an extruder, calender rolls, or a press, and is vulcanized by 1 to 30 minutes of heating at a temperature of 130 to 270 °C simultaneously, or after a molded product is introduced into a vulcanizer. A mold may or may not be used for vulcanization.

The propeller shaft of this invention can be made at a low cost, since it does not rely upon any adhesive, or other material, or any special bonding job for having its dynamic damper held in its proper position in the tubular body. The safety of the propeller shaft is ensured, since the dynamic damper in its tubular body is unlikely to be moved away from its proper position even by any large acceleration resulting from the use of the automobile, or any accident occurring to it. Moreover, the heat-resistant rubber composition enables the dynamic damper to retain the necessary properties, such as heat resistance and the absorption of vibrations, for a long time.

BRIEF DESCRIPTION OF THE DRAWINGS

FIG. 1 is an enlarged longitudinal sectional view of a part of a propeller shaft embodying this invention;
FIG. 2 is a view outlining the whole shape of the propeller shaft;
FIG. 3A is a front elevational view of a dynamic damper in the propeller shaft;
FIG. 3B is a sectional view taken along the line I-I of FIG. 3A;
FIG. 4 is a diagram used for explaining a method for determining the displacement of the dynamic damper and its reaction force;
FIG. 5 is a graph showing the reaction force of the elastic body in the dynamic damper in relation to the distance of its displacement;
FIG. 6 is a graph showing a load required for moving a mass member in a tubular body P1 in relation to the distance of its movement;

FIG. 7 is a graph showing a load required for moving a mass member in a tubular body P2 in relation to the distance of its movement; and

FIG. 8 is a graph showing a force causing the withdrawal of a dynamic damper in relation to a reaction force bearing upon its elastic body.

## DESCRIPTION OF THE PREFERRED EMBODIMENT

A propeller shaft embodying this invention will now be described with reference to the drawings.

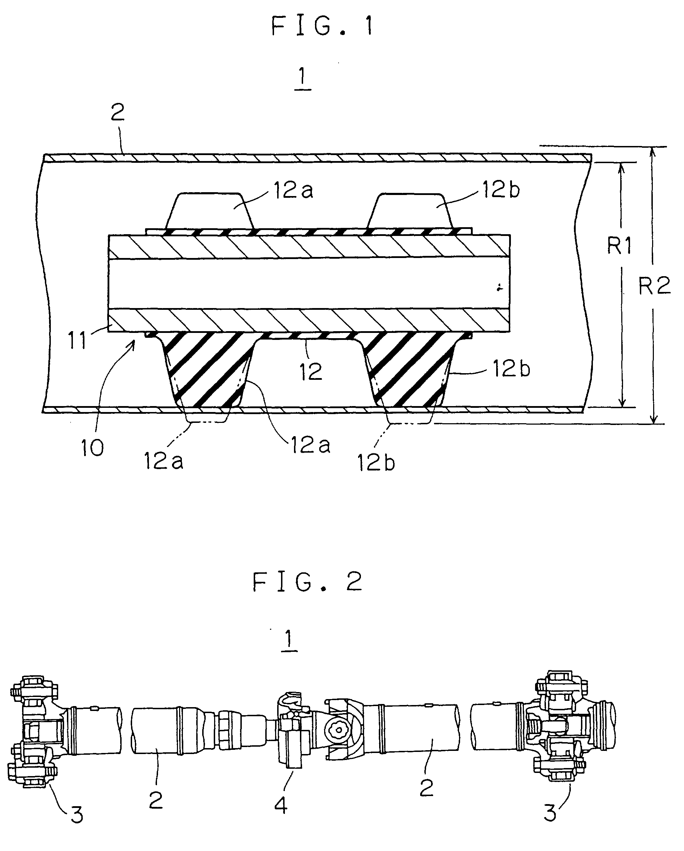

A propeller shaft 1 of the present embodiment is a propeller shaft of the three-joint type having a pair of joints 3 at the opposite ends, respectively, of a tubular body 2 and a middle bearing 4, as shown in FIG. 2. It is, however, needless to say that this invention is equally applicable to a propeller shaft of the two-joint type.

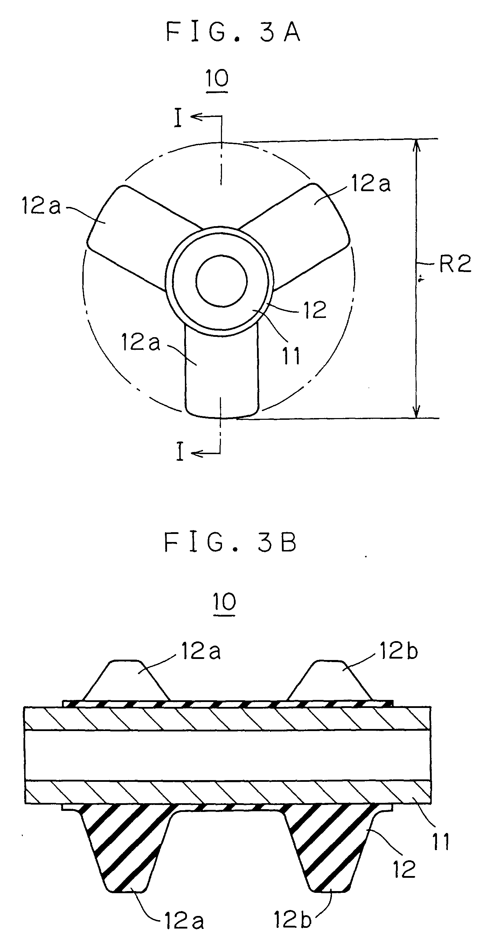

A dynamic damper 10 is mounted in the tubular body 2, as shown in FIG. 1. The dynamic damper 10 has a cylindrical metallic mass member 11 made of e.g. steel and an elastic body 12 covering the outer peripheral surface of the mass member 11, as shown in FIGS. 3A and 3B, too. The elastic body 12 has two axially spaced apart sets 12a and 12b of elastic protrusions . Each set consists of three radially outwardly extending protrusions 12a or 12b which are equally spaced apart from one another along the circumference of the elastic body 12, as is obvious from FIG. 3A.

The dynamic damper 10 is formed from a rubber composition of high heat resistance selected by testing different compositions as will hereinafter be described. The elastic body 12 has an outside diameter R2 larger than the inside diameter R1 of the tubular body 2, and is radially compressed for elastic deformation in its protrusions 12a and 12b, as shown in FIG. 1, so that the damper 10 may be securely held against slipping movement from its proper position in the tubular body 2 without relying upon any adhesive, or special holding member, or any special bonding job. These features have been selected after careful study about a reduction in the cost of manufacture, the prolonged retention of properties, e.g. heat resistance and the power of absorbing vibrations, and the ensurance of safety.

Referring first to the heat resistance of the rubber composition, a rubber composition was prepared by mixing 100 parts by weight of EPDM, one part by weight of sulfur and 50 parts by weight of carbon black, further adding five parts by weight of zinc white, one part by weight of stearic acid and two parts by weight of a vulcanization accelerator, and the composition was molded and vulcanized to form a sample S1. For the sake of comparison, a sample S2 was formed from another composition containing chloroprene rubber instead of EPDM.

The EPDM consisted of ethylene, propylene and an unconjugated diene, and had a molar ethylene/propylene ratio of 70/30, an intrinsic viscosity $[\eta]$ of 3.9 dl/g as determined in decalin at 135 °C and a melt flow index of 0.3 g/10 minutes as determined at 230 °C after oil extension with 50 phr of paraffinic oil. The unconjugated diene was 5-ethylidene-2-norbornene.

A hot air aging test was conducted on samples S1 and S2. More specifically, No. 3 dumbbell specimens were prepared from samples S1 or S2 in accordance with the JIS K 6257 method, were heated for 70 hours in an atmosphere having a temperature of 120 °C (normal oven method), and were examined for any change in hardness - $\Delta H_S$ (points), in modulus - $\Delta M_{100}$ (%), in tensile (or breaking) strength - $\Delta T_B$ (%) and in elongation - $\Delta E_B$ (%). The results are shown in Table 1 below. A change in hardness not exceeding +5 points is acceptable, while any greater change is unacceptable.

Table 1

| | Rubber composition | |
|---|---|---|
| | Sample S1 | Sample S2 |
| Change in hardness, $\Delta H_S$ (points) | +3 | +10 |
| Change in modulus, $\Delta M_{100}$ (%) | +48 | +92 |
| Change in tensile strength, $\Delta T_B$ (%) | -1 | -3 |
| Change in elongation, $\Delta E_B$ (%) | -29 | -34 |

As is obvious from Table 1, the specimens of sample S1 showed a smaller change in any of hardness, modulus, tensile strength and elongation than those of sample S2. It has, thus, been confirmed that a rubber composition containing EPDM like sample S1 makes an elastic body of high heat resistance and durability.

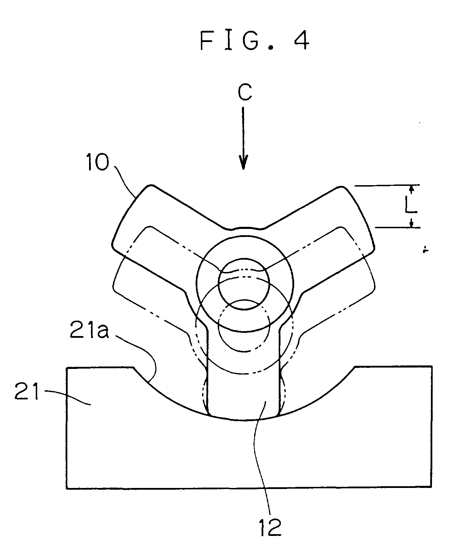

Sample S1 was used to make a dynamic damper as shown at 10 in FIGS. 3A and 3B. Its elastic body 12 had an outside diameter R2 of 68.15 mm. A load was applied to the dynamic damper 10 to compress its elastic body 12 for elastic deformation, as shown in FIG. 4, whereby its reaction by elastic deformation was examined.

FIG. 4 shows a generally U-shaped jig 21 having a contact surface 21a having a radius of curvature which was equal to that of the inner peripheral surface of the tubular body of a common propeller shaft. The dynamic damper 10 had the free ends of two elastic protrusions 12a and 12b held against the contact surface 21a of the jig, and a load (N) was applied in the direction of an arrow C to the damper 10 to compress the elastic body 12 and particularly its protrusions 12a and 12b to cause the elastic deformation thereof as shown by broken lines in FIG. 4.

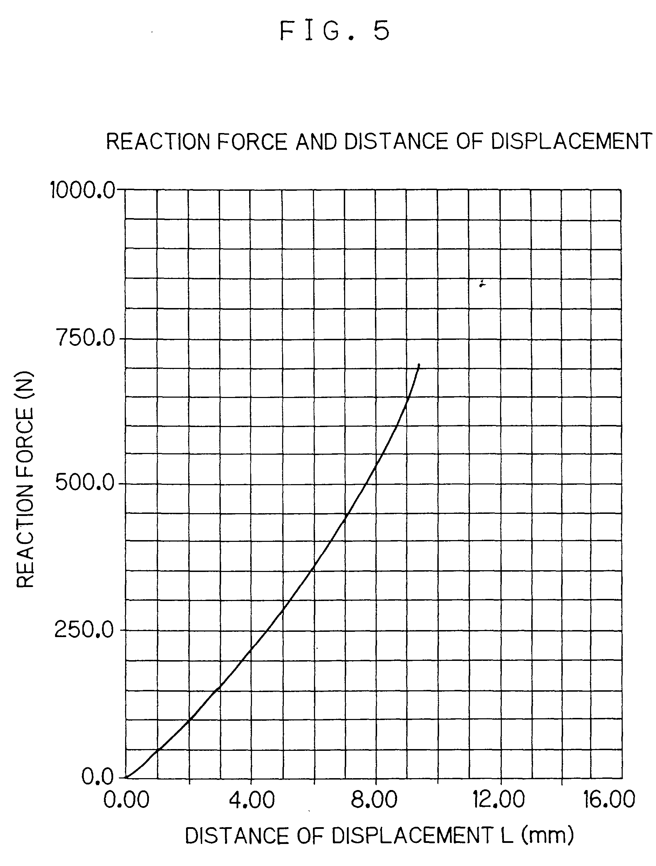

Measurements were made of the distance L (mm) of the displacement of the elastic body 12 by elastic deformation and the resulting reaction force bearing upon it. The results are shown in FIG. 5.

As is obvious from FIG. 5, the reaction force bearing upon the elastic body 12 increases in proportion to the distance L of its displacement. The reaction force as measured was the result of elastic deformation of only two of the six protrusions of the elastic body 12, and it is, thus, obvious that the reaction force bearing upon the whole elastic body 12 of the dynamic damper 10 held in the tubular body 2 is three times the value shown in FIG. 5.

Two tubular bodies P1 and P2 were prepared. The tubular body P1 had an inside diameter of 60.85 mm, while the tubular body P2 had an inside diameter of 59.65 mm. A dynamic damper 10 having an elastic body 12 with an outside diameter larger than the inside diameter of each tubular body was placed in position in each tubular body P1 or P2 by having its elastic body 12 compressed radially for elastic deformation.

The distance L of displacement of the elastic body 12 can be calculated by equation (1):

$$\text{Displacement } L = (R2 - R1)/2 \tag{1}$$

where R1 is the inside diameter of the tubular body P1 or P2, and R2 is the outside diameter of the elastic body 12.

As a result of calculation, the elastic body 12 showed a displacement L of 3.65 mm in the tubular body P1, or 4.25 mm in the tubular body P2. It is, thus, obvious from FIG. 5 that the elastic body 12 had a reaction force of 585 N in the tubular body P1, or 705 N in the tubular body P2.

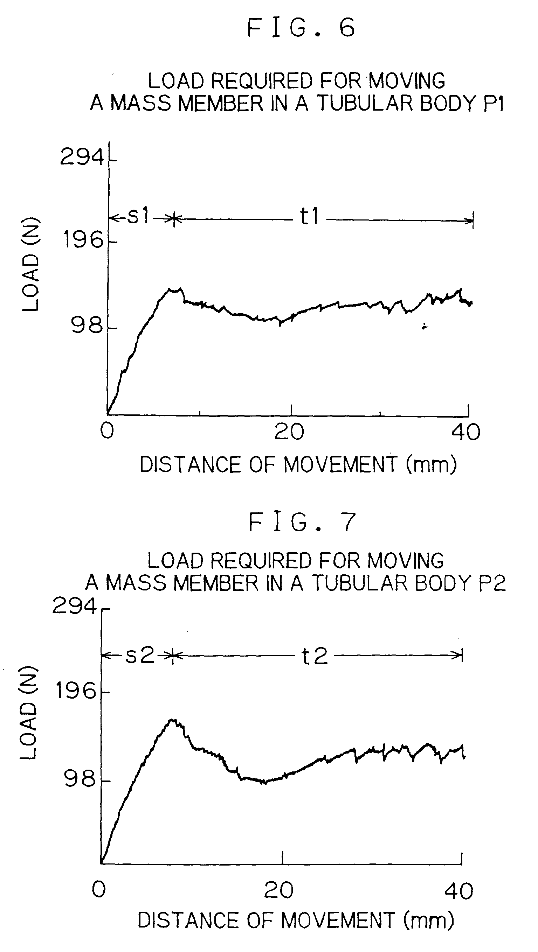

The dynamic damper 10 in each tubular body had its mass member 11 moved at a speed of 50 mm per minute axially of the tubular body, and the load as required for its movement was determined. The results are shown in FIG. 6 for the damper in the tubular body P1, and in FIG. 7 for the damper in the tubular body P2.

As is obvious from FIG. 6 or 7, the load required for moving the mass member 11 showed a sharp increase for a certain period of time after the start of its movement as shown by an area s1 in FIG. 6 or an area s2 in FIG. 7, and after reaching a certain level, or specifically about 147 N in FIG. 6 or about 167 N in FIG. 7, it showed a certain decrease and remained substantially unchanged thereafter as shown by an area t1 in FIG. 6, or an area t2 in FIG. 7.

It is obvious from these results that for some time after the start of movement of the mass member 11, frictional resistance did not allow the free ends of the protrusions 12a and 12b to move away from their original positions on the inner surface of the tubular body P1 or P2, but caused the elastic body 12 to undergo elastic deformation axially of the tubular body P1 or P2.

Such frictional resistance increases in proportion to the reaction force bearing upon the elastic body 12 and particularly its protrusions 12a and 12b. It is, thus, obvious that the reaction force decreased with the movement of the mass member 11, and that the free ends of the protrusions 12a and 12b began to slide away from their original positions in the tubular body P1 or P2 immediately after the load applied to the mass member 11 had reached a certain level, or had exceeded the frictional resistance described above.

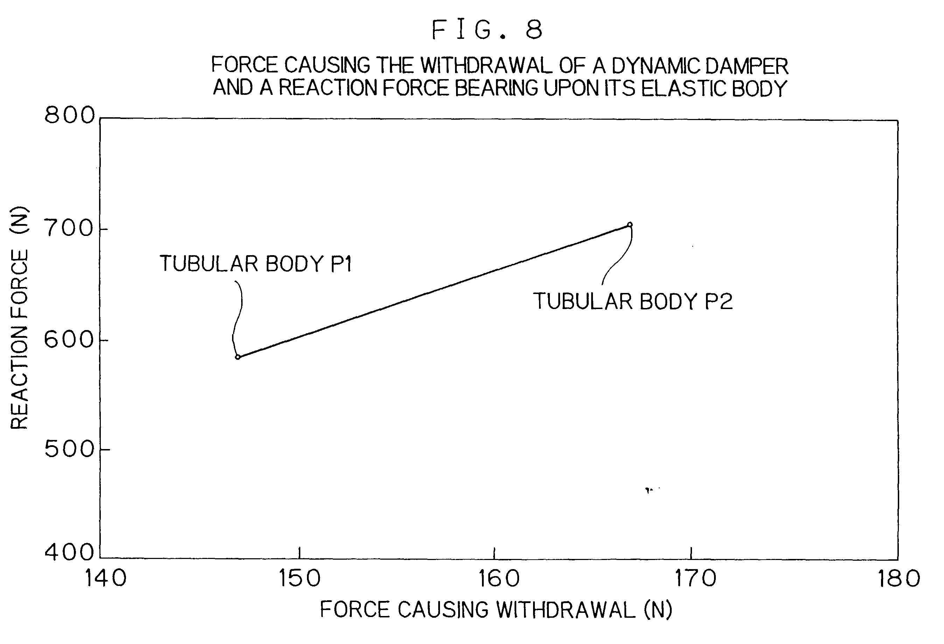

The load bearing upon the mass member 11 immediately before the free ends of the elastic protrusions 12a and 12b begin to slide is defined as a force causing the withdrawal of the dynamic damper 10. FIG. 8 is a graph showing a force causing the withdrawal of the dynamic damper 10 from the tubular body P1 or P2 in relation to the reaction force on the elastic body 12. As is obvious from FIG. 8, the force causing the withdrawal of the dynamic damper 10 increases with the reaction force on the elastic body 12, and the damper 10 is more resistant to withdrawal with an increase in the reaction force.

According to this invention, it is possible to produce a large reaction force and thereby maintain a force causing the withdrawal at a satisfactorily high level, since the dynamic damper 10 has its elastic body 12 compressed for elastic deformation when it is positioned in the tubular body 2, as described before. Thus, it is possible to position the dynamic damper 10 without relying upon any adhesive, or special holding member, or any special bonding job, while ensuring the safety, heat resistance and durability of the propeller shaft.

While the invention has been described by way of its preferred embodiment, it is to be understood that variations or modifications may be easily made by anybody skilled in the art without departing from the scope of this invention which is defined by the appended claims.

For example, it will be possible to obtain a high frictional resistance by forming an elastic body on a dynamic damper with a high coefficient of friction particularly in its surface portions contacting the inner surface of a tubular body, instead of producing a large reaction force by elastic deformation, as stated before. The number of the protrusions on the elastic body will also be variable within the spirit and scope of this invention.

A propeller shaft has a dynamic damper composed of a cylindrical mass member and an elastic body surrounding the mass member. The elastic body has an outside diameter larger than the inside diameter of a tubular body, and is held therein by compression and elastic deformation. The elastic body has a number of radially outwardly extending protrusions and its compression is such that a frictional resistance produced between its protrusions and the inner surface of the tubular body may be larger than a force causing the withdrawal of the damper from the tubular body. The damper can, thus, be placed in position without relying upon any adhesive, or special holding member, or any special bonding job.

**Claims**

1. A propeller shaft comprising a tubular body and a dynamic damper, the damper having a hollow or solid cylindrical mass member and an elastic body covering an outer peripheral surface of the mass member, the damper being so mounted in the tubular body that the elastic body may have an outer peripheral surface contacting an inner peripheral surface of the tubular body, the elastic body having an outside diameter exceeding an inside diameter of the tubular body, the elastic body being compressed for elastic deformation to have the damper secured on the inner peripheral surface of the tubular body, its compression being such that a frictional resistance produced in the area of contact between the elastic and tubular bodies may be larger than a force causing the withdrawal of the damper.

2. The propeller shaft according to claim 1, wherein the elastic body has a plurality of radially outwardly extending protrusions.

3. The propeller shaft according to claim 1 or 2, wherein the elastic body is of a rubber composition containing 100 parts by weight of an ethylene-alpha-olefin-unconjugated diene terpolymer, 0.1 to 10 parts by weight of sulfur and 25 to 100 parts by weight of carbon black.

4. The propeller shaft according to claim 3, wherein the terpolymer is of ethylene, an alpha-olefin having 3 to 20 carbon atoms and 5-ethylidene-2-norbornene, and has a molar ethylene/alpha-olefin ratio of 65/35 to 73/27, an intrinsic viscosity $[\eta]$ of 3.7 to 4.2 dl/g as determined in decalin at 135 °C and a melt flow index of 0.2 to 0.5 g/10 minutes as determined at 230 °C after oil extension with 50 phr of paraffinic oil.

# FIG. 1

<u>1</u>

# FIG. 2

<u>1</u>

# FIG. 3A

# FIG. 3B

FIG. 4

# F I G . 5

REACTION FORCE AND DISTANCE OF DISPLACEMENT

# FIG. 6

### LOAD REQUIRED FOR MOVING
### A MASS MEMBER IN A TUBULAR BODY P1

# FIG. 7

### LOAD REQUIRED FOR MOVING
### A MASS MEMBER IN A TUBULAR BODY P2

# FIG. 8

## FORCE CAUSING THE WITHDRAWAL OF A DYNAMIC DAMPER AND A REACTION FORCE BEARING UPON ITS ELASTIC BODY

TUBULAR BODY P1

TUBULAR BODY P2

REACTION FORCE (N)

FORCE CAUSING WITHDRAWAL (N)

EP 1 184 588 A2